# EUROPÄISCHE PATENTSCHRIFT

(11) **EP 1 479 031 B1**
(45) Veröffentlichungstag und Bekanntmachung des Hinweises auf die Patenterteilung: **19.09.2007**
(21) Anmeldenummer: 03742910.7
(22) Anmeldetag: 11.02.2003
(51) Int. Cl.: G06K 7/08, G06K 19/07, H04B 1/16

(54) **VERFAHREN ZUR STEUERUNG DER ENERGIEVER- SORGUNG EINES MOBILEN DATENSPEICHERS, VERWENDUNG DES VERFAHRENS IN EINEM IDENTIFIKATIONSSYSTEM MIT ZUMINDEST EINEM MOBILEN DATENSPEICHER UND EINEM SCHREIB-/LESEGERÄT**
METHOD FOR CONTROLLING THE POWER SUPPLY OF A MOBILE DATA MEMORY, USE OF SAID METHOD IN AN IDENTIFICATION SYSTEM HAVING AT LEAST ONE MOBILE DATA MEMORY
PROCEDE DE COMMANDE DE L'ALIMENTATION EN ENERGIE D'UNE MEMOIRE DE DONNEES MOBILE, UTILISATION DE CE PROCEDE DANS UN SYSTEME D'IDENTIFICATION COMPORTANT DES SUPPORTS DE DONNEES MOBILES

(30) Priorität: 28.02.2002 DE 10208732
(43) Veröffentlichungstag der Anmeldung: 24.11.2004
(73) Patentinhaber: SIEMENS AKTIENGESELLSCHAFT, 80333 München (DE)
(72) Erfinder: RENNER, Alexander, A-1120 Wien (AT); GILA, Janos, A-2340 Mödling (AT); KONRAD, Wolfgang, A-2340 Mödling (AT)
(86) Internationale Anmeldenummer: PCT/DE2003/000398
(87) Internationale Veröffentlichungsnummer: WO 2003/073363

(56) Entgegenhaltungen:
- EP-A- 0 766 215
- EP-A- 0 875 851
- WO-A-01/45280
- GB-A- 2 284 728

## Beschreibung

Die Erfindung betrifft ein Verfahren zur Steuerung der Energieversorgung eines mobilen Datenspeichers mit einer kontaktlosen Datenübertragung, welcher zumindest einen Energiespeicher und Verbraucher enthält. Die Erfindung betrifft weiterhin einen mobilen Datenspeicher sowie ein Identifikationssystem mit zumindest einem Schreib-/Lesegerät und einem mobilen Datenspeicher.

Als Stand der Technik sind Identifikationssysteme bekannt, die ein oder mehrere stationäre Schreib-/Lesegeräte enthalten, welche Daten mit mobilen Datenspeichern über eine in der Regel auf Funk basierenden Datenübertragungsstrecke berührungslos austauschen. Derartige Systeme werden in technischen Einrichtungen eingesetzt, in welchen eine Vielzahl von Objekten bzw. Güter möglichst schnell und frei bewegt werden müssen. Die Objekte können dabei unterschiedlichster Art sein, z.B. Pakete in einer Versandeinrichtung, Montageteile in einer Fertigungsanlage, Gepäckstücke in einem Transportsystem und vieles mehr.

Ein Beispiel für ein derartiges Identifikationssystem ist im ISO/IEC JTC 1/SC 31 WG4-Normentwurf mit dem Titel "Radio Frequency Identification Standard for Item Management - Air Interface, (WD 18000) vom 15.8.2001 beschrieben.

In dem Normentwurf ist vorgesehen, dass durch das Schreib-/Lesegerät eine Abfrage auf Vorhandensein eines mobilen Datenspeichers im Erfassungsbereich erfolgt. Dazu sendet das Schreib-/Lesegerät ein unmoduliertes erstes Trägersignal mit einer vorgebbaren Backscatter-Frequenz von z.B. 2,45 GHz aus.

Diese Signal kann passiv von einem im Empfangsbereich befindlichen mobilen Datenspeicher z.B. durch sog. "Backscattering" zum Schreib-/Lesegerät zurückgesendet werden.

Unabhängig davon moduliert der mobile Datenspeicher die Impedanz einer integrierten Sende-/Empfangsantenne in zyklischen Sequenzen mit einer signifikanten Erkennungssequenz zur Identifizierung des mobilen Datenspeichers bei einem Schreib-/Lesegerät. Zudem erhält das Schreib-/Lesegerät eine Zeitinformation darüber, wann der mobile Datenspeicher seinen Datenempfänger einschalten wird. Ist die zurückgesendete modulierte Backscatter-Frequenz vom Schreib-/Lesegerät empfangbar, so wird die Antwort auf Gültigkeit überprüft. Ist dies der Fall, so legt dieses zum Zeitpunkt der erwarteten Empfangsbereitschaft des mobilen Datenspeichers zusätzlich eine Kommunikations-Frequenz im Trägersignal an. Die Kommunikations-Frequenz ist dabei zur Backscatter-Frequenz um eine festen Frequenzbetrag, wie z.B. um ca. 10,6 MHz beim o.g. vorgeschlagenen Standard, verschoben. Mit dem Anlegen der Kommunikations-Frequenz signalisiert das Schreib-/Lesegerät dem mobilen Datenspeicher, dass eine Datenübertragung folgen wird. Das zweite Signal mit der Kommunikations-Frequenz ist daher für die Datenübertragung moduliert. Die übertragenen Daten können dabei z.B. eine Identifikationsnummer des Schreib-/Lesegeräts enthalten. Das von der Sende-/Empfangsantenne des mobilen Datenspeichers empfangene Empfangssignal wird zyklisch und in kurzen Abständen auf ein Vorhandensein der Backscatter-Frequenz und der Kommunikations-Frequenz abgefragt. Werden beide Frequenzen detektiert, so bleibt der Datenempfänger des mobilen Datenspeichers für den Datenempfang eingeschaltet.

Der mobile Datenspeicher weist zur Stromversorgung üblicherweise einen Energiespeicher, insbesondere eine Batterie auf. Zur Erzielung einer möglichst langen Betriebsdauer ist es daher notwendig, den Stromverbrauch zu minimieren. Eine bekannte Maßnahme zur Reduzierung des Stromverbrauchs ist z.B. die Auswahl von besonders stromsparenden elektronischen Bauelementen. Außerdem ist bei einem Schaltungsentwurf eines mobilen Datenspeichers zu berücksichtigen, dass für den Datenempfang i.Vgl. zum Datensenden ein vielfach größerer Strom benötigt wird. Im Gegensatz zum sehr geringen Strombedarf für das eingangs beschriebene passive "Backscattering", bei welchem die Antennenimpedanz nur kurzzeitig moduliert wird, müssen für den Datenempfang etliche Schaltkreise zugeschaltet werden. Diese Schaltkreise, wie z.B. Datendemodulatoren, Controller, elektronische Speicher, benötigen zudem eine Mindestzeit, bis diese eingeschwungen und betriebsbereit sind. Es ist außerdem zu berücksichtigen, dass im Betriebseinsatz eine Datenübertragung zwischen Schreib-/Lesegerät und mobilen Datenspeicher im allgemeinen nur in Bruchteilen der gesamten Betriebsdauer stattfindet. Im o.g. Normentwurf wurde daher folglich vorgeschlagen, zur Reduzierung des Stromverbrauchs den Datenempfänger des mobilen Datenspeichers nur zyklisch einzuschalten. Üblicherweise beträgt das Tastverhältnis zwischen Einschaltzeit und Ausschaltzeit etwa 0,3 bis 0,4. Während der Einschaltzeit erfolgt dann die Prüfung von ggf. vorhandenen Daten auf Gültigkeit.

Dennoch ist es trotz der o.g. Maßnahmen bis jetzt nicht möglich, den Stromverbrauch so weit zu minimieren, dass auf einen Batteriewechsel während der Lebensdauer des mobilen Datenspeichers verzichtet werden kann. Damit ist der Nachteil verbunden, dass bei erschöpfter Batterie die im mobilen Datenspeicher gespeicherten Daten verloren gehen können.

Ein weiterer Nachteil ist, dass für einen rechtzeitigen Batteriewechsel der mobile Datenspeicher z.B. aus dem Produktionsprozess herausgenommen werden muss. Dadurch können Verzögerungen und Störungen im Prozessverlauf entstehen. Je nach Anwendungsfall und Einsatzgebiet kann dabei die geforderte Lebensdauer eines mobilen Datenspeichers ca. 10 bis 15 Jahren betragen.

In der EP 0 766 215 A1, welches den Oberbegriff der unabhängigen Ansprüche 1 und 11 bildet, wird ein Verfahren zur Steuerung der Energieversorgung eines mobilen Transponders beschrieben. Er umfasst unter anderem einen Energiespeicher, eine Datenverarbeitungseinheit, einen elektronischen Speicher sowie weitere Verbraucher. Die Energieversorgung kann von einem Bereitschaftsmodus in einen vollständigen Betriebsmodus geschaltet werden. Im Bereitschaftsmodus wird der Energieverbrauch abgesenkt, wobei der Transponder empfangsbereit für ein Empfangssignal bleibt, das eine hochfrequente Trägerfrequenz mit einer aufmodulierten Niederfrequenz umfasst.

Weiterhin ist aus der WO 01/45280 A1 ein anderes Verfahren zur Steuerung der Energieversorgung eines mobilen Geräts bekannt, das eine Antenne, einen Energiespeicher, einen Demodulator, einen Empfänger sowie weitere Verbraucher umfasst. Auch bei diesem Gerät wird die Energieversorgung zwischen einem Betriebsmodus und einem Ruhemodus umgeschaltet. Im Ruhemodus bleibt das Gerät für das zwei Frequenzbereiche umfassende Empfangssignal empfangsbereit.

Die Aufgabe der Erfindung ist es, ein Verfahren zur Steuerung der Energieversorgung eines mobilen Datenspeichers sowie einen mobilen Datenspeicher zur Datenübertragung zu mindestens einem Schreib-/Lesegerät anzugeben, durch welche die Betriebsdauer des mobilen Datenspeichers erhöht werden kann.

Die Aufgabe der Erfindung wird gelöst mit einem Verfahren zur Steuerung der Energieversorgung eines mobilen Datenspeichers mit den Merkmalen des Anspruchs 1.

Bei dem Verfahren wird zur Steuerung der Energieversorgung eines mobilen Datenspeichers mit einer kontaktlosen Datenübertragung, welcher zumindest einen Energiespeicher und Verbraucher enthält, die Energieversorgung derart in einen Bereitschaftsmodus abgesenkt, dass der Datenspeicher empfangsbereit ist, und ein Empfangssignal derart auswertbar ist, dass zumindest eine vorgebbare Backscatter-Frequenz für einen möglichen Sendebetrieb und eine zugeordnete Kommunikations-Frequenz für einen Datenempfang detektierbar sind, und dann die Energieversorgung des Datenspeichers in einen vollständigen Betriebsmodus geschaltet wird. Die Energieversorgung kann für den Bereitschaftsmodus in einer zyklischen Pausenzeit in einen inaktiven Ruhemodus abgesenkt werden, wobei das Verhältnis von der zyklischen Pausenzeit zu einer übergeordneten Zykluszeit mindestens 10:11 und kleiner als 1 betragen kann. Weiterhin kann im vollständigen Betriebsmodus die Energieversorgung nach dem Datenempfang von ersten Daten und gültiger Auswertung in den Bereitschaftsmodus geschaltet werden. Weiterhin kann zuvor das Empfangssignal vorverstärkt und/oder zwischenfrequenzdemoduliert werden. Die im Empfangssignal enthaltene vorgebbare Backscatter-Frequenz und die zugeordnete Kommunikations-Frequenz kann so zwischenfrequenzdemoduliert werden, so dass ein Zwischenfrequenzsignal für einen möglichen Datenempfang erzeug- und detektierbar ist.

Das Verfahren kann in einem Identifikationssystem auf Basis des ISO/IEC 18000-Standards zum Betrieb in einem ISM-Frequenzband von 2,45 GHz, 5,6 GHz oder im UHF-Frequenzbereich betrieben werden.

Die Aufgabe wird weiterhin gelöst durch einen mobilen Datenspeicher zur Datenübertragung zu mindestens einem Schreib-/Lesegerät mit den Merkmalen des Anspruchs 11.

Der mobile Datenspeicher weist zur Datenübertragung zu mindestens einem Schreib-/Lesegerät eine Antenne, einen damit verbundenen Datenempfänger und einen Energiespeicher zur Energieversorgung auf. Der Datenempfänger weist zumindest einen Datendemodulator, einen elektronischen Speicher, eine damit verbundene Datenverarbeitungseinheit, und einen mit der Antenne verbundenen Pegeldetektor für zumindest eine vorgebbare Backscatter-Frequenz und eine zugeordnete Kommunikations-Frequenz auf, wobei der Pegeldetektor bei Detektion der Frequenzen zumindest den Datenempfänger an den Energiespeicher schaltet. Der Pegeldetektor kann eine Pegeldetektoreinheit aufweisen, welche zumindest ein elektronisch ansteuerbares Schaltmittel zur Verbindung des zumindest einen Datenempfängers mit dem Energiespeicher bei Detektion der Frequenzen ansteuert. Der Pegeldetektoreinheit kann weiterhin ein Zwischenfrequenzdemodulator vorgeschaltet sein, welcher ein Zwischenfrequenzsignal aus den in einem Empfangssignal enthaltenen Frequenzen erzeugt. Weiterhin kann der Pegeldetektor einen Pulsgenerator aufweisen, welcher für eine zyklische Pausenzeit innerhalb einer Zykluszeit die Pegeldetektoreinheit abschaltet. Außerdem kann zumindest der Pegeldetektor und der Datendemodulator auf einem Mikrochip integriert sein.

Das Verfahren kann in einem Identifikationssystem auf Basis des ISO/IEC 18000-Standards zum Betrieb in einem ISM-Frequenzband von 2,45 GHz, 5,6 GHz oder im UHF-Frequenzbereich betrieben werden.

Damit ist der Vorteil verbunden, dass für die gesamte Lebensdauer des mobilen Datenspeichers kein Batteriewechsel mehr erforderlich wird. Dadurch entfällt weiterhin vorteilhaft der damit verbundene logistische Aufwand für eine Suche und eine Herausnahme des mobilen Datenspeichers z.B. aus einem Fertigungs- oder Automatisierungsprozess. Mögliche Störungen der Prozessabläufe können dadurch vorteilhaft vermieden werden.

Ein weiterer Vorteil ist, dass auch keine gespeicherte Daten durch eine erschöpfte Batterie z.B. aufgrund eines versäumten Tauschs der Batterie verloren gehen können.

Dies wird in den beiden folgenden Figuren näher erläutert. Dabei zeigt
- FIG 1 :: einen beispielhaften Aufbau eines mobilen Datenspeichers mit einem Pegeldetektor gemäß der Erfindung,
- FIG 2 :: eine beispielhafte vorteilhafte Ausführungsvariante des Pegeldetektors gemäß der Erfindung,
- FIG 3 :: einen beispielhaften Signalverlauf eines Empfangssignals von einer Sende-/Empfangsantenne des mobilen Datenspeichers,
- FIG 4 :: einen beispielhaften Signalverlauf eines vom Pegeldetektor erzeugten Ansteuersignals für elektronische Schaltmittel gemäß der Erfindung,
- FIG 5 :: einen beispielhaften Stromverbrauchsverlauf eines mobilen Datenspeichers nach dem Stand der Technik,
- FIG 6 :: einen beispielhaften Stromverbrauchsverlauf des erfindungsgemäßen mobilen Datenspeichers, und
- FIG 7 :: einen beispielhaften Stromverbrauchsverlauf der erfindungsgemäßen Ausführungsvariante des mobilen Datenspeichers nach FIG 2.

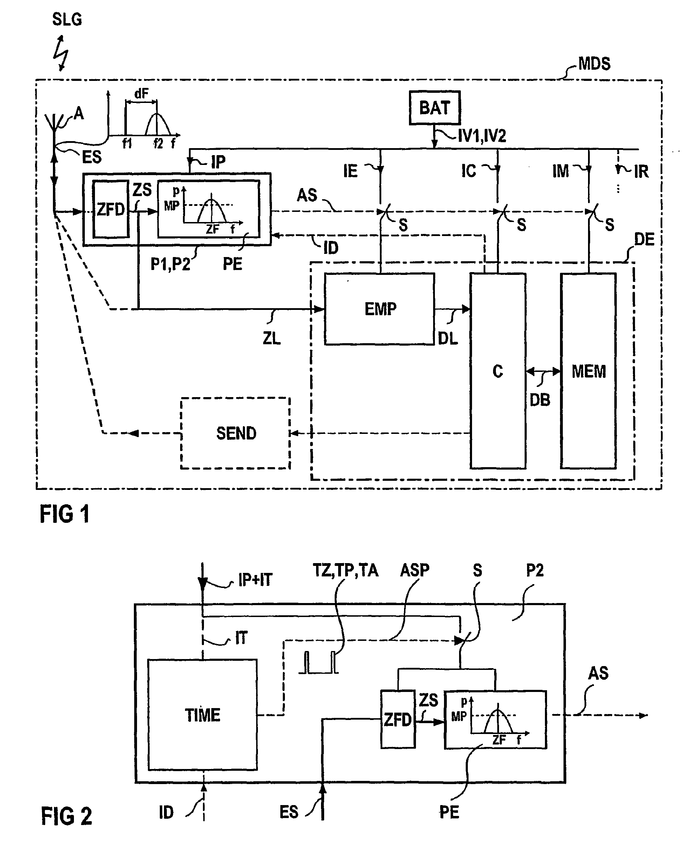

FIG 1 zeigt einen beispielhaften Aufbau eines mobilen Datenspeichers MDS mit einem Pegeldetektor P1,P2 gemäß der Erfindung. Der mobile Datenspeicher MDS weist zur Datenübertragung mit einem Schreib-/Lesegerät SLG eine beispielhafte integrierte Sende-/Empfangsantenne A auf. Ein von der Antenne A stammendes Empfangssignal ES wird einem Datenempfänger DE mittels einer Signalleitung ZL zugeführt. Der Datenempfänger DE weist weiterhin beispielhaft einen Datendemodulator EMP zur Umwandlung der im Empfangssignal ES aufmodulierten Daten auf. Diese werden zur digitalen Weiterverarbeitung an eine über eine Datenleitung DL verbundene Datenverarbeitungseinheit C, wie z.B. einen Controller C, weitergeleitet. Die ggf. aufbereiteten Daten werden dann in einem über einen Datenbus DB verbundenen elektronischen Speicher MEM abgelegt.

Zum Senden von Daten können auf dem umgekehrten Weg, wie in der Figur strichliiert dargestellt, Daten z.B. von dem beispielhaften Controller C an einen Datenmodulator SEND weitergeleitet werden. Die an die beispielhafte gemeinsame Sende-Empfangsantenne A angeschlossene Sendeeinheit SEND kann dabei aktiv- oder passivwirkend ausgeführt werden. Die passivwirkende Ausführungsform auf Basis des o.g. Backscattering-Verfahrens weist dabei einen besonders geringen Stromverbrauch auf.

Erfindungsgemäß wird das von der Sende-/Empfangsantenne A stammende Empfangssignal ES einem Pegeldetektor P1,P2 zur Detektion der eingangs beschriebenen Backscatter-Frequenz f1 für einen möglichen Sendebetrieb sowie der Kommunikationsfrequenz f2 für einen Datenempfang zugeführt. Zuvor kann das Empfangssignal ES ggf. verstärkt werden und im Anschluss zwischenfrequenzdemoduliert ZFD werden. Dies ist bereits im Beispiel der Figur dargestellt. Dabei werden die beiden Frequenzen f1, f2 im Empfangssignal ES vermischt. Im Mischsignal ist dann sowohl die Frequenzsumme f1 + f2 als auch die Frequenzdifferenz f1 - f2, die sogenannte Zwischenfrequenz ZF vorhanden ist. Der niederfrequente Signalanteil, das sog. Zwischenfrequenzsignal ZFS liegt dabei mit der zugehörigen Zwischenfrequenz ZF weit unterhalb der beiden o.g. Frequenzen f1, f2, so dass eine einfache signaltechnische Weiterverarbeitung möglich ist. Im Beispiel Figur wird das vorteilhafte Zwischenfrequenzsignal ZFS anschließend einer Pegeldetektoreinheit PE sowie dem Datendemodulator EMP zugeführt.

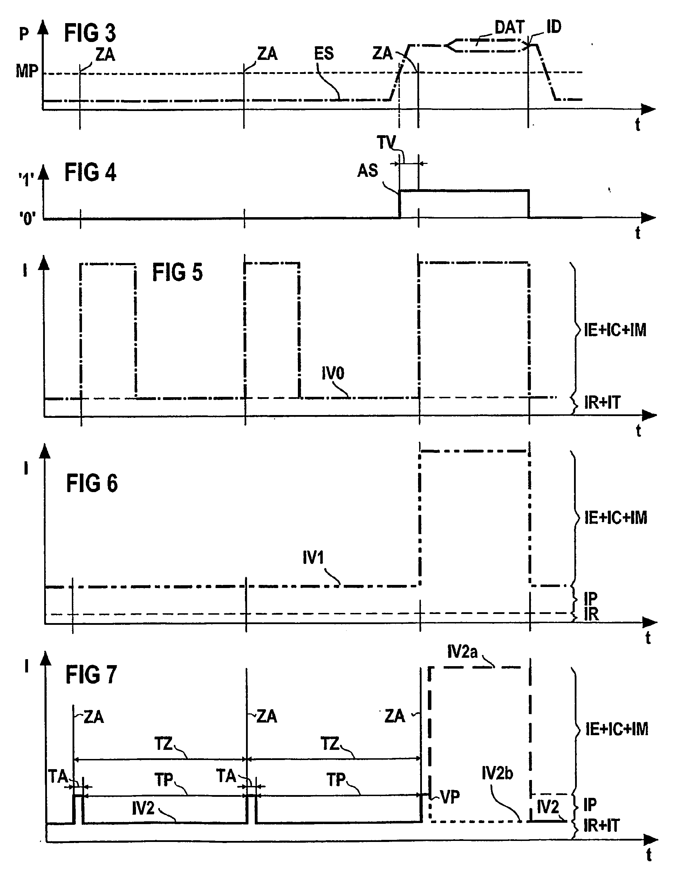

Wird gemäß der Erfindung ein Mindestpegel MP für jede der o.g. Frequenzen f1, f2, bzw. ein Mindestpegel MP des Zwischenfrequenzsignals ZFS überschritten, so können Schaltmittel S, wie z.B. ein Schalttransistor, über die beispielhafte Steuerleitung AS angesteuert werden. Die Schaltmittel S verbinden dann die jeweiligen Komponenten EMP,C,MEM des Datenempfängers DE mit der Batterie BAT für einen vollständigen Betriebsmodus. Dabei stellen sich im geschlossenen Zustand die in FIG 1 eingetragenen Ströme mit den Bezugszeichen IE,IC,IM ein. IR bezeichnet dabei einen Mindeststrom, der für einen Ruhemodus des mobilen Datenspeichers MDS notwendig ist, wie z.B. zur Aufrechterhaltung des Speicherinhalts des elektronischen Speichers MEM. Der mit IP bezeichnete Strom bezeichnet den Betriebsstrom des Pegeldetektors P1,P2. Üblicherweise beträgt der Ruhestrom IR des gesamten mobilen Datenspeichers MDS einige µA. Der Stromverbrauch IP des Pegeldetektors P1,P2 liegt dagegen mit einem Faktor 100 darüber. Werden zuzätzlich für einen Datenempfang alle Komponenten des Datenempfängers DE eingeschaltet, so kann sich der gesamte Stromverbrauch um einen weiteren Faktor 10 bis 20 erhöhen. Im Beispiel der FIG 6 ist zum besseren Verständnis der zugehörige Stromverbrauchverlauf IV1 des gesamten mobilen Datenspeichers MDS dargestellt. Aufgrund der betragsmäßig sehr unterschiedlichen Stromwerte für den Ruhestrom IR, den Pegeldetektorstrom IP sowie den Strom des Datenempfängers IE+IC+IM ist daher nur eine qualitative Darstellung möglich.

Erfindungsgemäß werden die beispielhaften Komponenten EMP,C, MEM des Datenempfängers DE oder auch nur Teile davon erst dann elektrisch zugeschaltet, wenn eine Aufforderung zur Datenübertragung seitens eines Schreib-/Lesegeräts SLG vorliegt. Erst dann erfolgt eine Auswertung des datendemodulierten Signals sowie eine Gültigkeitsprüfung der enthaltenen Daten.

Damit ist der Vorteil verbunden, dass gegenüber dem beispielhaften 100-fachen Strombedarf des Datenempfängers beim Stand der Technik mit dem Tastverhältnis von Ein- zur Ausschaltzeit von 0,3 ein um etwa den Faktor 30 reduzierter Stromverbrauch möglich ist. Dadurch ist vorteilhaft eine erhebliche Erhöhung der Betriebsdauer des mobilen Datenspeichers MDS möglich.

FIG 2 zeigt eine beispielhafte vorteilhafte Ausführungsvariante des Pegeldetektors P2 gemäß der Erfindung. Dieser weist eine Pegeldetektoreinheit PE zur Detektion der beiden Frequenzen f1,f2 bzw. der Zwischenfrequenz ZF sowie einen Pulsgenerator TIME auf.

Erfindungsgemäß schaltet der Pulsgenerator TIME die Pegeldetektoreinheit PE sowie den Zwischenfrequenzdemodulator ZFD während einer zyklischen Pausenzeit TP innerhalb einer Zykluszeit TZ mittels einer beispielhaften Ansteuerleitung ASP in einen inaktiven Bereitschaftsmodus IR,IT. In dieser Betriebsart ist keine Detektion der beiden o.g. Frequenzen f1,f2, bzw. der Zwischenfrequenz ZF möglich. IT ist dabei der gemittelte Strombedarf des Pulsgenerators TIME. Dieser entspricht betragsmäßig in etwa dem Ruhestrom IR. Die Detektion ist nur während einer kurzen zyklischen Abtastzeit TA für den Bereitschaftsmodus möglich. Die Summe der zyklischen Abtastzeit TA und der zyklischen Pausenzeit TP entspricht dabei der o.g. Zykluszeit TZ. Dies ist im Beispiel der Figur 2 aus Gründen der Übersichtlichkeit nicht dargestellt. Werden nun gemäß der Erfindung die beiden Frequenzen f1, f2, bzw. die Zwischenfrequenz ZF innerhalb der zyklischen kurzen Abtastzeit TA detektiert, so wird der mobile Datenspeicher MDS für den Datenempfang in den Bereitschaftsmodus geschaltet.

Damit ist der Vorteil verbunden, dass die Betriebsdauer des mobilen Datenspeichers MDS durch die weitere Absenkung des Stromverbrauchs nochmals deutlich verlängert werden kann. So kann der Stromverbrauch während einer Zykluszeit TZ um einen weiteren Faktor von ca. TA/TZ, d.h. um einen Faktor von ca. 10 bis 20 verringert werden.

Erfindungsgemäß kann das Verhältnis von der zyklischen Pausenzeit TP zu einer übergeordneten Zykluszeit TZ mindestens 10:11 und kleiner als 1 sein. Die Wahl des geeigneten Verhältnisses kann vorteilhaft auch so eingestellt werden, dass der mobile Datenspeicher MDS für die Verweilzeit im Erfassungsbereich des Schreib-/Lesegerät SLG zuverlässig ausgelesen und ggf. beschrieben werden kann. Die Verweilzeit kann dabei von Anwendungsfall zu Anwendungsfall unterschiedlich sein.

Weiterhin kann erfindungsgemäß die Energieversorgung nach dem Datenempfang von ersten Daten DAT des Schreib-/Lesegeräts SLG und nach gültiger Identifikation ID der Daten DAT vom vollständigen Betriebsmodus in den Bereitschaftsmodus geschaltet werden. Dadurch kann weiterhin vorteilhaft der Stromverbrauch reduziert werden. Im Beispiel der FIG 7 ist zum besseren Verständnis der zugehörige Stromverbrauchsverlauf IV2 des gesamten mobilen Datenspeichers MDS qualitativ dargestellt.

FIG 3 zeigt einen beispielhaften Signalverlauf eines Empfangssignals ES von einer Sende-/Empfangsantenne A des mobilen Datenspeichers MDS. Dabei ist parallel zur Zeitachse t in strichliierter Darstellung ein beispielhafter Mindestpegel MP für die o.g. Frequenzen f1, f2 bzw. der Zwischenfrequenz ZF eingetragen.

FIG 4 zeigt einen beispielhaften Signalverlauf eines vom Pegeldetektor P1 erzeugten Ansteuersignals AS mit den beispielhaften logischen Pegeln '1' und '0'. Überschreitet nun der Pegel p des Empfangssignals ES den Mindestpegel MP, so wechselt das Ansteuersignal AS für die Schaltmittel S beispielhaft seinen logischen Pegel von '0' nach '1'. Dabei legt das Schreib-/Lesegerät SLG die beiden Frequenzen f1, f2 mit einer Vorlaufzeit TV an, so dass diese in den zyklischen Abtastpunkten ZA des mobilen Datenspeichers MDS detektierbar sind.

FIG 5 zeigt einen beispielhaften Stromverbrauchsverlauf IV0 eines mobilen Datenspeichers nach dem Stand der Technik, bei welchem sämtliche Komponenten des Datenempfängers für einen vollständigen Betriebsmodus in zyklischen Abständen TZ eingeschaltet werden. Im inaktiven Ruhemodus stellt sich dabei der Ruhestrom IR+IT ein.

FIG 6 zeigt einen beispielhaften Stromverbrauchsverlauf IV1 für einen mobilen Datenspeichers MDS auf Basis des erfindungsgemäßen Verfahrens. Dabei ist zusätzlich zum Ruhestrom IR der Stromverbrauch IP des Pegeldetektors P1, P2 eingezeichnet. Erfindungsgemäß ist eine Detektion der beiden Frequenzen f1, f2 bzw. der Zwischenfrequenz ZF für einen Datenempfang bei einem vorteilhaften geringen Gesamtstromverbrauch möglich. Sämtliche Komponenten EMP,C,MEM des Datenempfängers DE werden erfindungsgemäß erst dann zugeschaltet, wenn der Pegeldetektor P1, P2 bei Detektion ein Ansteuersignal AS für die Schaltmittel S ausgibt.

FIG 7 zeigt einen beispielhaften Stromverbrauchsverlauf IV2 der erfindungsgemäßen Ausführungsvariante des mobilen Datenspeichers MDS gemäß FIG 2. Dabei wird erfindungsgemäß der Stromverbrauch IP des Pegeldetektors P2 während einer zyklischen Pausenzeit TP auf den Ruhestrom IR sowie auf den notwendigen Strom IT für den Pulsgenerator TIME abgesenkt. Der gemittelte Strom IT ist dabei betragsmäßig vergleichbar zum Ruhestrom IR. Im Beispiel der FIG 7 sind daher beide Stromwerte IR,IT zur vereinfachten Darstellung in einer Figur zusammengefasst. Weiterhin erfolgt für eine zyklische Abtastzeit TA, welche mit dem zyklischen Abtastzeitpunkt ZA startet, ein Wechsel vom inaktiven Ruhemodus in den Bereitschaftsmodus. Während der Abtastzeit TA kann dann die Detektion der beiden Frequenzen f1,f2 erfolgen. Die Abtastzeit TA kann dabei so bemessen sein, dass unter Berücksichtigung von Einschwingvorgängen und Verarbeitungszeiten im Pegeldetektor P2 ein sicheres Ansteuersignal AS am Ende der Abtastzeit TA erzeugt werden kann. Im Beispiel der FIG 7 liegt das Ergebnis der Detektion in einem Verzweigungspunkt VP vor. Bei Detektion stellt sich der Stromverbrauchsverlauf IV2a ein, ansonsten wird wieder in den inaktiven Ruhezustand mit dem Stromverbrauch IT+IT gemäß dem Stromverbrauchsverlauf IV2b zurückgewechselt.

Im Vergleich zum Beispiel der FIG 6 ist somit eine weitere deutliche Reduzierung des Stromverbrauchs vorteilhaft möglich.

## Patentansprüche

1. Verfahren zur Steuerung der Energieversorgung eines mobilen Datenspeichers (MDS) mit einer kontaktlosen Datenübertragung mittels einer Antenne (A), welcher zumindest einen Energiespeicher (BAT) und als Verbraucher einen Datendemodulator (EMP), eine Datenverarbeitungseinheit (C), einen elektronischen Speicher (MEM) und weitere Verbraucher (P1, P2) enthält, wobei die Energieversorgung zumindest in einen Bereitschaftsmodus (IP,IR,IT) und in einen vollständigen Betriebsmodus (IE,IC,IM) geschaltet werden kann, **dadurch gekennzeichnet, daß** die Energieversorgung derart in den Bereitschaftsmodus (IP,IR,IT) abgesenkt wird, dass
a) der mobile Datenspeicher (MDS) empfangsbereit ist, und
b) ein Empfangssignal (ES) der Antenne (A) derart auswertbar ist, dass zumindest eine vorgebbare Backscatter-Frequenz (f1) für einen möglichen Sendebetrieb und eine zugeordnete Kommunikations-Frequenz (f2) für einen Datenempfang detektierbar sind,
indem das Empfangssignal (ES) zwischenfrequenzdemoduliert (ZFD) wird und daraus ein Zwischenfrequenzsignal (ZS) ans den im Empfangssignal (ES) enthaltenen Frequenzen (f₁,f₂) erzeugt und ausgewertet wird.

2. Verfahren nach Anspruch 1, bei dem die Energieversorgung (IP,IR,IT) für den Bereitschaftsmodus in einer zyklischen Pausenzeit (TP) in einen inaktiven Ruhemodus (IR,IT) abgesenkt wird.

3. Verfahren nach Anspruch 2, bei dem das Verhältnis von der zyklischen Pausenzeit (TP) zu einer übergeordneten Zykluszeit (TZ) mindestens 10:11 und kleiner als 1 ist.

4. Verfahren nach einem der vorangegangenen Ansprüche, bei dem im vollständigen Betriebsmodus (IE,IC,IM) die Energieversorgung nach dem Datenempfang von ersten Daten (DAT) und gültiger Auswertung (ID) in den Bereitschaftsmodus (IP,IR, IT) geschaltet wird.

5. Verfahren nach einem der vorangegangenen Ansprüche, bei dem das Empfangssignal (ES) vorverstärkt wird.

6. Verfahren nach einem der vorangegangenen Ansprüche, bei dem die im Empfangssignal (ES) enthaltene vorgebbare Backscatter-Frequenz (f1) und die zugeordnete Kommunikations-Frequenz (f2) zwischenfrequenzdemoduliert (ZFD) werden, so dass ein Zwischenfrequenzsignal (ZS) für einen möglichen Datenempfang erzeug- und detektierbar ist.

7. Anwendung des Verfahrens nach einem der vorangegangenen Ansprüche in einem Identifikationssystem auf Basis des ISO/ IEC 18000-Standards zum Betrieb in einem ISM-Frequenzband.

8. Anwendung des Verfahrens nach Anspruch 7 zum Betrieb des Identifikationssystems in einem ISM-Frequenzband von 2,45 GHz.

9. Anwendung des Verfahrens nach Anspruch 7 zum Betrieb des Identifikationssystems in einem ISM-Frequenzband von 5,6 GHz.

10. Anwendung des Verfahrens nach Anspruch 7 zum Betrieb des Identifikationssystems in einem ISM-Frequenzband (ISM) im UHF-Frequenzbereich.

11. Mobiler Datenspeicher (MDS) zur Datenübertragung zu mindestens einem Schreib-/Lesegerät (SLG), mit einer Antenne (A), einem damit verbundenen Datenempfänger (DE), welcher zumindest einen Datendemodulator (EMP), eine Datenverarbeitungseinheit (C) und einen elektronischen Speicher (MEM) aufweist, und mit einem Energiespeicher (BAT) zur Energieversorgung, **dadurch gekennzeichnet, daß** ein mit der Antenne (A) verbundener Pegeldetektor (P1, P2) für zumindest eine vorgebbare Backscatter-Frequenz (f1) und eine zugeordnete Kommunikations-Frequenz (f2) vorgesehen ist, wobei der Pegeldetektor (P1,P2) bei Detektion der Frequenzen (f1,f2) zumindest den Datenempfänger (DE) an den Energiespeicher (BAT) schaltet, und wobei der Pegeldetektor (P1,P2) eine Pegeldetektoreinheit (PE) aufweist und der Pegeldetektoreinheit (PE) ein Zwischenfrequenzdemodulator (ZFD) vorgeschaltet ist, welcher ein Zwischenfrequenzsignal (ZS) aus den in einem Empfangssignal (ES) der Antenne (A) enthaltenen Frequenzen (f1,f2) erzeugt.

12. Mobiler Datenspeicher (MDS) nach Anspruch 11, wobei die Pegeldetektoreinheit (PE) zumindest ein elektronisch ansteuerbares Schaltmittel (S) zur Verbindung des zumindest einen Datenempfängers (DE) mit dem Energiespeicher (BAT) bei Detektion der Frequenzen (f1,f2) ansteuert.

13. Mobiler Datenspeicher (MDS) nach einem der vorangegangenen Ansprüche 11 bis 12, wobei der Pegeldetektor (P2) einen Pulsgenerator (TIME) aufweist, welcher für eine zyklische Pausenzeit (TP) innerhalb einer Zykluszeit (TZ) die Pegeldetektoreinheit (PE) abschaltet.

14. Mobiler Datenspeicher (MDS) nach einem der Ansprüche 11 bis 13, wobei zumindest der Pegeldetektor (P1,P2) und der Datendemodulator (EMP) auf einem Mikrochip integriert sind.

15. Identifikationssystem mit zumindest einem Schreib-/Lesegerät (SLG) und zumindest einem mobilen Datenspeicher (MDS) nach einem der vorangegangenen Ansprüche 11 bis 14.

## Claims

1. Method for controlling the power supply of a mobile data memory (MDS) by means of contactless data transmission by means of an antenna (A), which contains at least one energy accumulator (BAT) and, as load, a data demodulator (EMP), a data processing unit (C), an electronic memory (MEM) and other loads (P1, P2), wherein the power supply can be switched at least into a standby mode (IP, IR, IT) and into a full operating mode (IE, IC, IM), **characterized in that** the power supply is dropped into the standby mode (IP, IR, IT) in such a manner that
a) the mobile data memory (MDS) is ready for reception, and
b) a received signal (ES) of the antenna (A) can be evaluated in such a manner that at least one predeterminable backscatter frequency (f1) for a possible transmitting operation and an associated communication frequncy (f2) for data reception can be detected,
**in that** the received signal (ES) is intermediate-frequency-demodulated (ZFD) and from this an intermediate frequency signal (ZS) is generated from the frequencies (f₁, f₂) contained in the received signal (ES) and it is evaluated.

2. Method according to Claim 1, in which the power supply (IP, IR, IT) is dropped into an inactive sleep mode (IR, IT) in a cyclic pause time (TP) for the standby mode.

3. Method according to Claim 2, in which the ratio of the cyclic pause time (TP) to a higher-level cycle time (TZ) is at least 10:11 and less than 1.

4. Method according to one of the preceding claims, in which, in full operating mode (IE, IC, IM), the power supply is switched into the standby mode (IP, IR, IT) after the data reception of first data (DAT) and valid evaluation (ID).

5. Method according to one of the preceding claims, in which the received signal (ES) is preamplified.

6. Method according to one of the preceding claims, in which the predeterminable backscatter frequency (f1) contained in the received signal (ES) and the associated communication frequency (f2) are intermediate-frequency-demodulated (ZFD) so that an intermediate frequency signal (ZS) can be generated and detected for possible data reception.

7. Application of the method according to one of the preceding claims in an identification system based on the ISO/IEC 18000 standard for operation in an ISM frequency band.

8. Application of the method according to Claim 7 for operating the identification system in an ISM frequency band of 2.45 GHz.

9. Application of the method according to Claim 7 for operating the identification system in an ISM frequency band of 5.6 GHz.

10. Application of the method according to Claim 7 for operating the identification system in an ISM frequency band (ISM) in the UHF frequency range.

11. Mobile data memory (MDS) for transmitting data to at least one read/write device (SLG), comprising an antenna (A), a data receiver (DE) connected thereto, which has at least one data demodulator (EMP), one data processing unit (C) and one electronic memory (MEM), and comprising an energy accumulator (BAT) for the power supply, **characterized in that** a level detector (P1, P2) connected to the antenna (A) is provided for at least one predeterminable backscatter frequency (f1) and an associated communication frequency (f2), wherein the level detector (P1, P2), on detection of the frequencies (f1, f2), switches at least the data receiver (DE) to the energy accumulator (BAT), and wherein the level detector (P1, P2) has a level detector unit (PE) and the level detector unit (PE) is preceded by an intermediate-frequency demodulator (ZFD) which generates an intermediate frequency signal (ZS) from the frequencies (f1, f2) contained in a received signal (ES) of the antenna (A).

12. Mobile data memory (MDS) according to Claim 11, wherein the level detector unit (PE) drives at least one electronically drivable switching means (S) for connecting the at least one data receiver (DE) to the energy accumulator (BAT) on detection of the frequencies (f1, f2).

13. Mobile data memory (MDS) according to one of the preceding Claims 11 to 12, wherein the level detector (P2) has a pulse generator (TIME) which disconnects the level detector unit (PE) for a cyclic pause time (TP) within a cycle time (TZ).

14. Mobile data memory (MDS) according to one of Claims 11 to 13, wherein at least the level detector (P1, P2) and the data demodulator (EMP) are integrated on one microchip.

15. Identification system comprising at least one read/write device (SLG) and at least one mobile data memory (MDS) according to one of the preceding Claims 11 to 14.

## Revendications

1. Procédé de commande de l'alimentation en énergie d'une mémoire de données mobile (MDS) avec une transmission de données sans contact au moyen d'une antenne (A), laquelle mémoire de données mobile contient au moins un accumulateur d'énergie (BAT) et comme consommateurs un démodulateur de données (EMP), une unité de traitement de données (C), une mémoire électronique (MEM) et d'autres consommateurs (P1, P2), l'alimentation en énergie pouvant être commutée au moins dans un mode de disponibilité (IP, IR, IT) et dans un mode de fonctionnement intégral (IE, IC, IM), **caractérisé par le fait que** l'alimentation en énergie est réduite au mode de disponibilité (IP, IR, IT) de telle sorte que
a) la mémoire de données mobile (MDS) est prête à recevoir, et
b) un signal reçu (ES) de l'antenne (A) est évaluable de telle sorte qu'au moins une fréquence de rétrodiffusion pouvant être prescrite (f1) pour un fonctionnement en émission possible et une fréquence de communication associée (f2) pour une réception de données sont détectables,
le signal reçu (ES) étant démodulé en fréquence intermédiaire (ZFD) et, à partir de là, un signal en fréquence intermédiaire (ZS) étant produit à partir des fréquences (f1, f2) contenues dans le signal reçu (ES) et étant évalué.

2. Procédé selon la revendication 1, dans lequel l'alimentation en énergie (IP, IR, IT) pour le mode de disponibilité est réduite dans un temps de pause cyclique (TP) à un mode de repos inactif (IR, IT).

3. Procédé selon la revendication 2, dans lequel le rapport du temps de pause cyclique (TP) à un temps de cycle de rang supérieur (TZ) est au moins 10:11 et inférieur à 1.

4. Procédé selon l'une des revendications précédentes, dans lequel, dans le mode de fonctionnement intégral (IE, IC, IM), l'alimentation en énergie est commutée après la réception de premières données (DAT) et après une évaluation valide (ID) dans le mode de disponibilité (IP, IR, IT).

5. Procédé selon l'une des revendications précédentes, dans lequel le signal reçu (ES) est préalablement amplifié.

6. Procédé selon l'une des revendications précédentes, dans lequel la fréquence de rétrodiffusion (f1) pouvant être prescrite et contenue dans le signal reçu (ES) et la fréquence de communication associée (f2) sont démodulées en fréquence intermédiaire (ZFD) de telle sorte qu'un signal en fréquence intermédiaire (ZS) pour une réception de données possible peut être produit et détecté.

7. Utilisation du procédé selon l'une des revendications précédentes dans un système d'identification sur la base du standard ISO / IEC 18000 pour le fonctionnement dans une bande de fréquence ISM.

8. Utilisation du procédé selon la revendication 7 pour le fonctionnement du système d'identification dans une bande de fréquence ISM de 2,45 GHz.

9. Utilisation du procédé selon la revendication 7 pour le fonctionnement du système d'identification dans une bande de fréquence ISM de 5,6 GHz.

10. Utilisation du procédé selon la revendication 7 pour le fonctionnement du système d'identification dans une bande de fréquence (ISM) dans le domaine des fréquences UHF.

11. Mémoire de données mobile (MDS) pour la transmission de données vers au moins un appareil de lecture / écriture (SLG) avec une antenne (A), avec un récepteur de données (DE) qui est relié à celle-ci et qui comporte au moins un démodulateur de données (EMP), une unité de traitement de données (C) et une mémoire électronique (MEM) et avec un accumulateur d'énergie (BAT) pour l'alimentation en énergie, **caractérisée par le fait qu'**un détecteur de niveau (P1, P2) relié à l'antenne (A) est prévu pour au moins une fréquence de rétrodiffusion (f1) pouvant être prescrite et une fréquence de communication associée (f2), le détecteur de niveau (P1, P2) lors de la détection des fréquences (f1, f2) commutant au moins le récepteur de données (DE) sur l'accumulateur d'énergie (BAT), le détecteur de niveau (P1, P2) comportant une unité détectrice de niveau (PE) et un démodulateur en fréquence intermédiaire (ZFD) qui produit un signal en fréquence intermédiaire (ZS) à partir des fréquences (f1, f2) contenues dans un signal reçu (ES) de l'antenne (A) étant branché du côté amont de l'unité détectrice de niveau (PE).

12. Mémoire de données mobile (MDS) selon la revendication 11, l'unité détectrice de niveau (PE) commandant au moins un moyen de commutation à commande électronique (S) pour relier le ou les récepteurs de données (DE) à l'accumulateur d'énergie (BAT) lors de la détection des fréquences (f1, f2).

13. Mémoire de données mobile (MDS) selon l'une des revendications précédentes 11 à 12, le détecteur de niveau (P2) comportant un générateur d'impulsions (TIME) qui coupe l'unité détectrice de niveau (PE) pour un temps de pause cyclique (TP) à l'intérieur d'un temps de cycle (TZ).

14. Mémoire de données mobile (MDS) selon l'une des revendications 11 à 13, au moins le détecteur de niveau (P1, P2) et le démodulateur de données (EMP) étant intégrés sur une micropuce.

15. Système d'identification avec au moins un appareil de lecture / écriture (SLG) et au moins une mémoire de données mobile (MDS) selon l'une des revendications 11 à 14.
